(19) Europäisches Patentamt
European Patent Office
Office européen des brevets

(11) **EP 1 057 677 A1**

(12) **EUROPÄISCHE PATENTANMELDUNG**

(43) Veröffentlichungstag:
06.12.2000 Patentblatt 2000/49

(51) Int. Cl.$^7$: **B60K 31/04**, F02D 17/02,
F02D 41/36

(21) Anmeldenummer: 00106428.6

(22) Anmeldetag: 24.03.2000

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **31.05.1999 DE 19924862**

(71) Anmelder: **DaimlerChrysler AG
70567 Stuttgart (DE)**

(72) Erfinder: **Linden, Thomas
70327 Stuttgart (DE)**

(54) **Verfahren zur Einstellung einer vorgebbaren Zielgeschwindigkeit in einem Fahrzeug**

(57) Bei einem Verfahren zur Einstellung einer vorgebbaren Zielgeschwindigkeit in einem Kraftfahrzeug mit Brennkraftmaschine werden unter Berücksichtigung von Fahrzeug-Zustands- und Betriebsgrößen in einem Geschwindigkeits-Regelsystem Stellsignale zur Manipulation der Drosselklappe der Brennkraftmaschine erzeugt.

Um das Reglerverhalten im Teilabschaltbetrieb zu verbessern, wird der Reglerausgang des Regelsystems über eine Dosierkennlinie zur Erzeugung des die Drosselklappenstellung manipulierenden Stellsignals geführt, wobei sowohl dem Vollbetrieb als auch dem Teilabschaltbetrieb jeweils eine Dosierkennlinie zugeordnet ist. Im Zeitpunkt der Umschaltung zwischen Vollbetrieb und Teilabschaltbetrieb wird der Reglerausgang zunächst über die dem bisherigen Betrieb zugeordnete Dosierkennlinie und anschließend über eine dem folgenden Betrieb zugeordnete, inverse Dosierkennlinie geführt.

EP 1 057 677 A1

**Beschreibung**

Die Erfindung betrifft ein Verfahren zur Einstellung einer vorgebbaren Zielgeschwindigkeit in einem Fahrzeug nach dem Oberbegriff des Anspruches 1.

Es sind Geschwindigkeits-Regelsysteme bekannt, mit denen eine vom Fahrer vorgegebene oder über ein automatisches Ermittlungssystem errechnete Zielgeschwindigkeit in einem Kraftfahrzeug selbsttätig eingehalten werden kann. Diese Geschwindigkeits-Regelsysteme umfassen beispielsweise Tempomat-Funktionen, bei denen das Fahrzeug eine vom Fahrer gewählte Mindestgeschwindigkeit einhalten soll, und auch Begrenzer-Funktionen, bei denen das Fahrzeug eine vom Fahrer vorgegebene oder eine in Abstands-Regelungssystemen automatisch ermittelte Höchstgeschwindigkeit nicht überschreiten darf. Zur Umsetzung der Begrenzer-Funktion werden in dem Geschwindigkeits-Regelsystem ausgehend von der Höchstgeschwindigkeit und den aktuellen Fahrzeugzustandsgrößen, insbesondere der aktuellen Fahrzeuggeschwindigkeit, Stellsignale erzeugt, mittels denen der Motor, das Getriebe und/oder die Radbremsen zur Einhaltung der Zielgeschwindigkeit eingestellt werden.

In dem Geschwindigkeits-Regelsystem wird die Abweichung der Ist-Geschwindigkeit vom vorgegebenen Sollwert einem Regler - üblicherweise einem $PDT_1$-Regler - zugeführt, in dem ein Stellsignal zur Einstellung einer Drosselklappe im Ansaugtrakt der Brennkraftmaschine erzeugt wird. Um eine lineare Umsetzung des Reglerausgangs in ein zugehöriges Motormoment zu erreichen, wird der Reglerausgang zunächst über eine Dosierkennlinie geleitet, welche Nichtlinearitäten im Motor-Momentenverlauf kompensiert, und anschließend als Stellsignal einem Stellglied der Drosselklappe zugeführt. Die Dosierkennlinie und auch die Parameter des verwendeten Reglers werden im Hinblick auf ein optimales Reglerverhalten ausgelegt.

Aus der Druckschrift DE 44 39 424 C1 geht ein Fahrgeschwindigkeitsregler hervor, in welchem Steilsignale erzeugt werden, die am Reglerausgang nochmals manipuliert werden, um das Reglerverhalten insbesondere in Bereichen geringer Motorlast zu verbessern. Am Ausgang des Reglers ist ein Abschwächungsglied vorgesehen, welches das Reglersignal im unteren Wertebereich vor der Weiterleitung an ein Kraftstoffmengen-Einstellglied abschwächt, wodurch unerwünschte Drehzahlpendelungen bei geringer Motorlast unterdrückt werden und der Fahrkomfort verbessert wird. Weitergehende Einsatz- und Regelungsmöglichkeiten sind aus der DE 44 39 424 C1 aber nicht bekannt.

Es ist andererseits bekannt, eine von zwei Zylinderbänken einer mehrzylindrigen Kolbenbrennkraftmaschine im Teillastbetrieb abzuschalten, im Vollastbetrieb dagegen beide Zylinderbänke zu befeuern.

Eine derartige Brennkraftmaschine ist beispielsweise in der DE 196 11 363 C1 offenbart. Hierbei stellt sich das Problem, daß die Brennkraftmaschine im Teillastbetrieb und im Vollastbetrieb ein unterschiedliches Übertragungsverhalten aufweist, was bei der Umschaltung zwischen teilweiser und vollständiger Zylinderbefeuerung im geregelten Geschwindigkeitsbetrieb zu Reglerinstabilitäten führen kann. Die Reglerparameter und die Dosierkennlinie müssen daher für jede Betriebsart entsprechend angepaßt werden.

In der Druckschrift DE 33 34 720 C2 ist eine Steuervorrichtung zur Zylinderabschaltung beschrieben worden, bei der eine Abschaltung nur in stationären Betriebspunkten des Motors durchgeführt wird. Durch die Begrenzung der Abschaltzeitpunkte auf stationäre Betriebspunkte wird zwar die Gefahr von Instabilitäten reduziert, zugleich ist aber auch das Einsatzspektrum auf diese Betriebspunkte eingeschränkt, so daß der Vorteil der Zylinderabschaltung - reduzierter Kraftstoffverbrauch - auch nur in einem beschränkten Maße ausgenutzt werden kann.

Der Erfindung liegt das Problem zugrunde, das Reglerverhalten von Geschwindigkeits-Regelsystemen für Fahrzeuge mit Brennkraftmaschinen, die mit einer Zylinder-Teilabschaltung ausgerüstet sind, zu verbessern.

Dieses Problem wird erfindungsgemäß mit den Merkmalen des Anspruches 1 gelöst.

Gemäß der Neuerung ist sowohl dem Vollbetrieb der Brennkraftmaschine als auch dem Zylinder-Teilabschaltbetrieb jeweils eine Dosierkennlinie zugeordnet, die für beide Betriebsarten des Motors eine Zuordnung zwischen dem Reglerausgang und der Drosselklappenposition liefert. Um zu verhindern, daß bei einer Umschaltung beim Wechsel zwischen Vollbetrieb und Teilabschaltung das die Drosselklappe beaufschlagende Stellsignal einen Sprung erfährt, der zu einer schlagartigen Positionsänderung der Drosselklappe und zu einem Momentensprung führen würde, wird der Reglerausgang bei der Umschaltung zunächst über die dem bisherigen Betrieb zugeordnete Dosierkennlinie und anschließend über eine invertierte Form einer der anderen Betriebsart zugeordneten Dosierkennlinie geleitet. Hierdurch werden Sprünge im Verlauf des Stellsignals bei der Umschaltung zwischen Vollbetrieb und Teilabschaltung vermieden. Der Regler wird für die folgende Betriebsart initialisiert und das im Regler der nachfolgenden Betriebsart erzeugte Steilsignal wird auf den zuletzt generierten Wert des dem vorausgegangenen Regler entsprechenden Stellsignals gesetzt, wodurch ein sprungfreier Übergang zwischen den Betriebsarten realisiert wird.

Wird die Brennkraftmaschine zunächst im Vollbetrieb mit Beteuerung aller Zylinder gefahren und anschließend aufgrund einer Lastreduzierung in einen Teilabschaltbetrieb geschaltet, bei dem nur ein Teil der Zylinder befeuert wird, so wird erfindungsgemäß im Zeitpunkt der Umschaltung das gemäß der Vollbetrieb-Dosierkennlinie erzeugte Stellsignal über die invertierte Teilabschaltbetrieb-Dosierkennlinie geleitet, einer weiteren Manipulation unterzogen und schließlich dem Stellglied der Drosselklappe zugeleitet. Wird dagegen von Teilabschalt- auf Vollbetrieb umgeschaltet, so wird das Stellsignal des Teilabschaltbetriebs vor der Weiterleitung an das Drosselklappen-Stellglied zunächst über die invertierte Vollbetrieb-Dosierkennlinie geleitet sowie einer sich anschließenden Manipulation unterzogen. In beiden Fällen stimmen die Stellsignale unmittelbar vor und nach der Umschaltung überein.

Die Manipulation des Stellglieds über die inverse Dosierkennlinie wird zweckmäßig nur einmalig im Zeitpunkt der Umschaltung durchgeführt. Nach Beendigung der Umschaltung wird das Stellglied über den der neuen Betriebsart zugeordneten Regler geführt, eine Berücksichtigung der inversen Dosierkennlinie ist nicht mehr erforderlich.

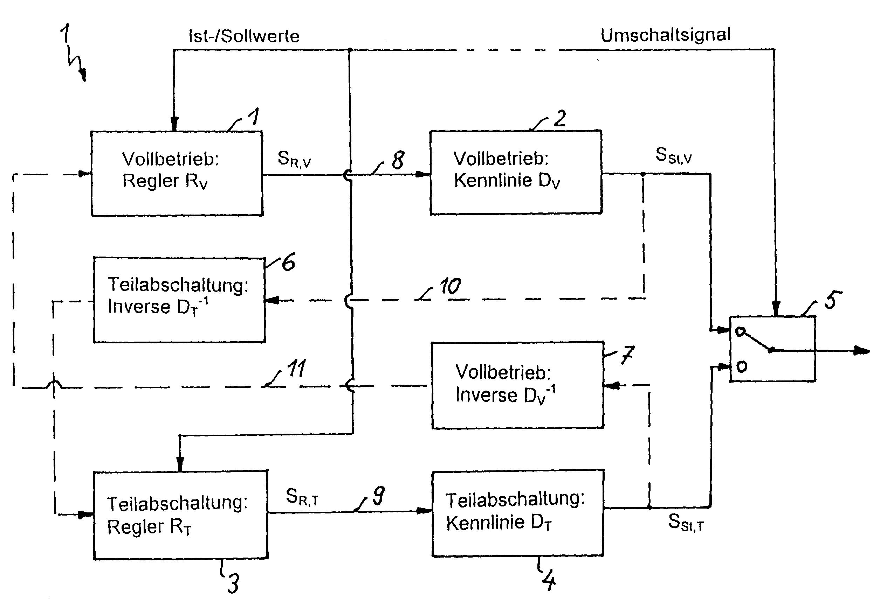

Weitere Vorteile und zweckmäßige Ausführungsformen sind den weiteren Ansprüchen, der Figurenbeschreibung und der Zeichnung zu entnehmen, in der ein Blockschaltbild zur Auslegung eines Fahrzeug-Regelsystems gezeigt ist, welches zur Geschwindigkeitsregelung in Fahrzeugen mit Zylinder-Teilabschaltung einsetzbar ist.

Das Fahrzeug-Regelsystem 1 weist zwei Zweige 8, 9 für die Geschwindigkeitsregelung auf, jeweils einen für die Regelung im Vollbetrieb der Brennkraftmaschine mit Befeuerung aller Zylinder und einen für die Regelung im Teilabschaltbetrieb mit Beteuerung nur eines Teils der Zylinder. Der Zweig 8 für die Regelung im Vollbetrieb umfaßt einen im Block 1 dargestellten Vollbetrieb-Regler $R_V$ und eine im Block 2 dargestellte, nachgeschaltete Vollbetrieb-Dosierkennlinie $D_V$, entsprechend besteht der dem Teilabschaltbetrieb zugeordnete Zweig 9 aus einem Teilabschaltbetrieb-Regler $R_T$ (siehe Block 3) und einer nachgeschalteten Teilabschaltbetrieb-Dosierkennlinie $D_T$ (siehe Block 4). Die Reglerparameter der beiden Regler $R_V$, $R_T$ und die Dosierkennlinien $D_V$, $D_T$ unterscheiden sich für den Vollbetrieb und den Teilabschaltbetrieb.

Beide Regler $R_V$ und $R_T$ empfangen Geschwindigkeits-Soll- und Istwerte als Eingangssignale, als Reglertyp wird beispielsweise jeweils ein $PDT_1$-Regler eingesetzt. In Abhängigkeit der Regelgrößen, des verwendeten Regeltyps, der Reglerparameter sowie der Reglerinitialisierung werden in den Reglern $R_V$, $R_T$ Regler-Ausgangssignale $S_{R,V}$ bzw. $S_{R,T}$ erzeugt, die jeweils über die nachgeschaltete Dosierkennlinie $D_V$ bzw. $D_T$ geführt werden, woraufhin Drosselklappen-Stellsignale $S_{St,V}$ bzw. $S_{St,T}$ erzeugt werden, die zunächst einem Schalter 5 zugeführt und im weiteren Verlauf einem Drosselklappen-Stellglied zur Einstellung der Drosselklappenposition zugeführt werden. Im Schalter 5 erfolgt je nach Betriebsart der Brennkraftmaschine eine Zuordnung zum Vollbetriebs-Zweig 8 oder zum Teilabschaltbetriebs-Zweig 9, wobei die entsprechende Zuordnung mittels eines Umschaltsignals durchgeführt wird.

Im regulären Betriebsmodus erfolgt die Geschwindigkeitsregelung je nach Betriebsart ausschließlich über einen der Zweige 8 oder 9. Sobald die Betriebsart aufgrund sich ändernder Lastverhältnisse von Vollbetrieb auf Teilabschaltbetrieb oder von Teilabschaltbetrieb auf Vollbetrieb umgeschaltet wird, erfolgt im Zeitpunkt der Umschaltung zur Vermeidung von Momentsprüngen eine modifizierte Regelung unter Berücksichtigung von inversen Dosierkennlinien $D_V^{-1}$ bzw. $D_T^{-1}$, welche aus dem Zusammenhang

$$D_V^{-1} * D_V = E$$

bzw.

$$D_T^{-1} * D_T = E$$

aus den Dosierkennlinien $D_V$ für Vollbetrieb bzw. $D_T$ für Teilabschaltbetrieb ermittelt werden, wobei mit „E" die Einheitsmatrix bezeichnet wird.

Im Zeitpunkt der Umschaltung von Vollbetrieb auf Teilabschaltbetrieb wird zunächst im Vollbetriebs-Zweig 8 im Regler $R_V$ ein Reglersignal $S_{R,V}$ erzeugt, das über die Vollbetrieb-Dosierkennlinie $D_V$ geleitet wird. Das erzeugte Vollbetrieb-Stellsignal $S_{St,V}$ wird nun über einen Verbindungszweig 10, welcher den Ausgang des Vollbetriebs-Zweigs 8 mit dem Eingang des Teilabschaltbetriebs-Zweigs 9 verbindet, der im Block 6 dargestellten inversen Teilabschaltbetrieb-Dosierkennlinie $D_T^{-1}$ zugeführt und im weiteren Verlauf als Eingangssignal in den Teilabschaltbetriebs-Zweig 9 eingespeist. Ein entsprechendes Drosselklappen-Stellsignal $S_{St,T}$ wird über den Schalter 5, der auf Durchschaltung der Stellsignale des Teilabschaltbetriebs geschaltet ist, dem Drosselklappen-Stellglied zugeführt.

Im Zeitpunkt der Umschaltung von Teilabschaltbetrieb auf Vollbetrieb wird im Teilabschaltbetriebs-Zweig 9 im Regler $R_T$ und in der Dosierkennlinie $D_T$ ein dem Teilabschaltbetrieb zugeordnetes Stellsignal $S_{St,T}$ erzeugt, das jedoch aufgrund des auf Durchleitung des Vollbetriebs umgelegten Schalters 5 nicht unmittelbar dem Drosselklappen-Stellglied zugeführt wird. Vielmehr wird das Stellsignal $S_{St,T}$ über einen zweiten Verbindungszweig 11, der den Ausgang des Teilabschaltbetriebs-Zweigs 9 mit dem Eingang des Vollbetriebs-Zweigs 10 verbindet, zunächst der inversen Vollbetrieb-Dosierkennlinie $D_V^{-1}$, welche im Block 7 dargestellt ist, zugeführt und anschließend als Eingangssignal im Vollbetrieb-Regler $R_V$ sowie in der VollbetriebDosierkennlinie $D_V$ manipuliert und schließlich über den Schalter 5 zum Drosselklappen-Stellglied geleitet.

Bei beiden Umschaltvorgängen werden beide Zweige 8, 9 durchlaufen, wobei in der Verbindung zwischen den Zweigen noch die Inverse der Dosierkennlinle des nachfolgenden Zweiges berücksichtigt wird. Hierdurch werden Momentensprünge im Motormomentenverlauf vermieden.

Die inversen Dosierkennlinien werden nur im Zeitpunkt der Umschaltung durchlaufen, um die erforderlichen Reglerinitialisierungen für einen stetigen Übergang beim Reglerwechsel durchzuführen. Nach der Umschaltung wird der Regler wieder im regulären Betrieb gefahren, in dem nur der jeweils aktuelle Zweig für Vollbetrieb oder Teilabschaltbetrieb durchlaufen wird.

## Patentansprüche

1. Verfahren zur Einstellung einer vorgebbaren Zielgeschwindigkeit in einem Kraftfahrzeug mit Brennkraftmaschine, die im Vollbetrieb mit Befeuerung aller Zylinder und im Teilabschaltbetrieb mit teilweiser Abschaltung der Zylinder betrieben werden kann, wobei in einem Geschwindigkeits-Regelsystem (1) unter Berücksichtigung von Fahrzeug-Zustands- und Betriebsgrößen Stellsignale zur Manipulation der Drosselklappe der Brennkraftmaschine dadurch erzeugt werden,

   - daß der Reglerausgang ($S_{R,V}$, $S_{R,T}$) des Regelsystems (1) über eine Dosierkennlinie ($D_V$, $D_T$) zur Erzeugung des die Drosselklappenstellung manipulierenden Stellsignals ($S_{St,V}$, $S_{St,T}$) geführt wird, wobei sowohl dem Vollbetrieb als auch dem Teilabschaltbetrieb jeweils eine Dosierkennlinie ($D_V$, $D_T$) zugeordnet ist,
   - und daß im Zeitpunkt der Umschaltung zwischen Vollbetrieb und Teilabschaltbetrieb der Reglerausgang ($S_{R,V}$, $S_{R,T}$) zunächst über die dem bisherigen Betrieb zugeordnete Dosierkennlinie ($D_V$, $D_T$) und anschließend über eine dem folgenden Betrieb zugeordnete, inverse Dosierkennlinie ($D_T^{-1}$, $D_V^{-1}$) geführt wird, wobei die inverse Dosierkennlinie ($D_T^{-1}$, $D_V^{-1}$) durch Inversion der dem folgenden Betrieb zugeordneten nicht-inversen Dosierkennlinie ($D_T$, $D_V$) gebildet wird.

2. Verfahren nach Anspruch 1,
   **dadurch gekennzeichnet,**

   daß sowohl dem Vollbetrieb als auch dem Teilabschaltbetrieb jeweils ein Regler ($R_V$, $R_T$) zugeordnet ist.

3. Verfahren nach Anspruch 2,
   **dadurch gekennzeichnet,**

   daß der im Zeitpunkt der Umschaltung über die inverse Dosierkennlinie ($D_T^{-1}$, $D_V^{-1}$) geführte Reglerausgang ($S_{R,V}$, $S_{R,T}$) im weiteren Verlauf dem dem folgenden Betrieb zugeordneten Regler ($R_T$, $R_V$) zugeführt wird.

4. Verfahren nach Anspruch 3,
   **dadurch gekennzeichnet,**

   daß im Anschluß an den dem folgenden Betrieb zugeordneten Regler ($R_T$, $R_V$) der Reglerausgang ($S_{R,T}$, $S_{R,V}$) über die dem folgenden Betrieb zugeordnete Dosierkennlinie ($D_T$, $D_V$) geführt wird.

5. Verfahren nach einem der Ansprüche 2 bis 4,
   **dadurch gekennzeichnet,**

   daß die Reglerparameter des Vollbetrieb-Reglers ($R_V$) und die Reglerparameter des Teilabschaltbetrieb-Reglers ($R_T$) sich unterscheiden.

6. Verfahren nach einem der Ansprüche 1 bis 5,
   **dadurch gekennzeichnet,**

   daß die Beaufschlagung des Stellsignals ($S_{R,V}$, $S_{R,T}$) mit der inversen Dosierkennlinie ($D_T^{-1}$, $D_V^{-1}$) nur einmalig im Zeitpunkt der Umschaltung durchgeführt wird.

7. Verfahren nach einem der Ansprüche 1 bis 6,
   **dadurch gekennzeichnet,**

   daß nach Abschluß der Umschaltung das Stellsignal ($S_{R,V}$, $S_{R,T}$) ausschließlich durch den dem aktuellen Betrieb zugeordneten Regler ($R_V$, $R_T$) und Dosierkennlinie ($D_V$, $D_T$) erzeugt wird.

Umschaltsignal

Ist-/Sollwerte

5

Vollbetrieb: Kennlinie $D_V$ — 2

Vollbetrieb: Inverse $D_V^{-1}$ — 7

Teilabschaltung: Kennlinie $D_T$ — 4

$S_{St,V}$  $S_{St,T}$

10

Vollbetrieb: Regler $R_V$ — 1

$S_{R,V}$

8

Teilabschaltung: Inverse $D_T^{-1}$ — 6

11

Teilabschaltung: Regler $R_T$ — 3

$S_{R,T}$

9

Europäisches Patentamt

**EUROPÄISCHER RECHERCHENBERICHT**

Nummer der Anmeldung

EP 00 10 6428

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 646 851 A (NITZ LARRY THEODORE ET AL) 8. Juli 1997 (1997-07-08) * Anspruch 16 * | 1 | B60K31/04 F02D17/02 F02D41/36 |
| A | US 5 267 541 A (TAGUCHI YOSHINORI ET AL) 7. Dezember 1993 (1993-12-07) * Spalte 5, Zeile 47 – Spalte 6, Zeile 6 * | 1 | |
| A | US 5 137 104 A (ETOH YOSHIYUKI) 11. August 1992 (1992-08-11) * Anspruch 1 * | 1 | |
| D,A | DE 196 11 363 C (DAIMLER BENZ AG) 12. Juni 1997 (1997-06-12) * Ansprüche; Abbildungen * | 1 | |
| | | | RECHERCHIERTE SACHGEBIETE (Int.Cl.7) |
| | | | B60K F02D |

Der vorliegende Recherchenbericht wurde für alle Patentansprüche erstellt

| Recherchenort | Abschlußdatum der Recherche | Prüfer |
|---|---|---|
| DEN HAAG | 12. September 2000 | Bufacchi, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

# EP 1 057 677 A1

## ANHANG ZUM EUROPÄISCHEN RECHERCHENBERICHT
## ÜBER DIE EUROPÄISCHE PATENTANMELDUNG NR.

EP 00 10 6428

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-09-2000

| Im Recherchenbericht angeführtes Patentdokument | | Datum der Veröffentlichung | Mitglied(er) der Patentfamilie | | Datum der Veröffentlichung |
|---|---|---|---|---|---|
| US 5646851 | A | 08-07-1997 | KEINE | | |
| US 5267541 | A | 07-12-1993 | JP | 5001579 A | 08-01-1993 |
| US 5137104 | A | 11-08-1992 | JP | 1094034 A | 12-04-1989 |
| | | | JP | 1094035 A | 12-04-1989 |
| DE 19611363 | C | 12-06-1997 | FR | 2746444 A | 26-09-1997 |
| | | | GB | 2311330 A,B | 24-09-1997 |
| | | | IT | RM970118 A | 22-09-1997 |
| | | | US | 5782088 A | 21-07-1998 |

EPO FORM P0461

Für nähere Einzelheiten zu diesem Anhang : siehe Amtsblatt des Europäischen Patentamts, Nr. 12/82

7